Europäisches Patentamt

(19) European Patent Office    (11) Publication number: **0 172 684**

Office européen des brevets                    **B1**

(12)                EUROPEAN PATENT SPECIFICATION

(45) Date of publication of patent specification: **15.06.88**    (51) Int. Cl.⁴: **D 21 C 5/02**

(21) Application number: **85305423.7**

(22) Date of filing: **30.07.85**

(54) **Dimethyldiallyl ammonium chloride/acrylamide copolymers as deinkers.**

(30) Priority: **02.08.84 US 637236**

(43) Date of publication of application:
**26.02.86 Bulletin 86/09**

(45) Publication of the grant of the patent:
**15.06.88 Bulletin 88/24**

(84) Designated Contracting States:
**BE DE FR GB IT NL SE**

(56) References cited:
**EP-A-0 058 622**
**US-A-4 077 930**

**ABSTRACT BULLETIN OF THE INSTITUTE OF PAPER CHEMISTRY, vol. 48, no. 8, February 1978, page 896, no. 8324, Appleton, Wisc., US; F.G. EASTWOOD et al.: "Laboratory and pilot-scale machine upgrading of mixed waste paper"**

(73) Proprietor: **CALGON CORPORATION**
**Route 60-Campbell's Run Road**
**Robinson Township Pennsylvania 15205 (US)**

(72) Inventor: **Tefft, Edwin R.**
**2359 Hidden Timber Drive**
**Pittsburgh Pennsylvania 15241 (US)**

(74) Representative: **Crampton, Keith John Allen et al**
**D YOUNG & CO 10 Staple Inn**
**London WC1V 7RD (GB)**

Courier Press, Leamington Spa, England.

## Description

In a typical deinking process, waste newsprint is introduced into an aqueous bath, which may or may not be alkaline, to which has been added, as a deinking agent, a surface-active agent or detergent. The waste newsprint becomes defibred in the bath, and the ink is removed from the fibres by the detergent. The resulting slurry is composed of substantially deinked newsprint fibres, water, and detergent and ink particles. The slurry is rinsed, liquid is drained from the slurry, and the resulting thickened pulp is recycled into sheets of paper by conventional processing procedures well known to those skilled in papermaking.

The effectiveness of the deinking agent is determined by the brightness of the resulting paper sheets. Brightness is determined by a conventional test, and is expressed as a brightness number. The higher the number, the better the brightness.

In accordance with the present invention, a method for deinking cellulosic fibrous material impregnated with ink comprises stirring a mixture of the said material and water in the presence of, as deinking agent, an incompletely hydrolysed copolymer of dimethyldiallyl ammonium chloride and acrylamide. The ratio of dimethyldiallyl ammonium chloride to acrylamide is not critical, neither is the molecular weight of the copolymer. Up to 5% of diethyldiallyl ammonium chloride (DEDAAC) may be substituted for some of the dimethyldiallyl ammonium chloride (DMDAAC).

The deinking agents are used in solution in substantially aqueous media.

The temperature of the deinking solution may vary anywhere from room temperature, e.g., 4°C to 21°C (40°F to 70°F), up to 93°C (200°F).

In preparing the deinking solution, water is charged to the reactor or pulper according to industrial standards. The deinking agent is preferably added to the water prior to the addition of the waste paper or the waste.

The deinking process is described in U.S. Patent Specifications US—A—3,501,373, 3,932,206, 3,986,922, 4,162,186 and 4,311,552.

European Patent Specification EP—A—0 058 622 discloses the reduction of deposition of pitch-like resins in paper production by addition to the papermaking slurry of 0.5 to 20 parts per million by weight of certain polyampholytes, including copolymers of DMDAAC and/or DEDAAC with acrylamide and/or acrylic acid.

U.S. Patent Specification US—A—4,077,930 discloses the use of polymers of DMDAAC possibly also with DEDAAC, with acrylamide in forming stable emulsions for use in various papermill operations to improve the efficacy of separation of liquids and solids.

Although any weight ratio of acrylamide (AM) to DMDAAC (and optionally DEDAAC) may be used, the preferred ratio is in the range 75:25 to 25:75, especially 55:45 to 45:55.

The preferred molecular weight of the copolymer is 2,000,000 to 10,000,000 as determined by gel permeation chromatography.

Although any amount of the copolymer may be used, it is preferred to use 0.01 to 0.1%, particularly 0.04 to 0.06% by weight, active of the copolymer, based on the dry paper weight.

The copolymer is preferably hydrolysed to about 4 to 5%. The acrylamide is hydrolysed to acrylic acid.

Examples

The deinker of the invention was evaluated according to Tappi useful method 233, "Deinkability of High Ground Wood Waste Paper".

10 g of waste paper was torn into approximately 2.54 cm (1-inch) squares. 10 ml of a 0.05%, by weight, active solution of dimethyldiallyl ammonium chloride/acrylamide copolymer (based on the weight of the dry paper), 0.025 g sodium tripolyphosphate and 0.15 g of sodium metasilicate were mixed with the paper in 250 ml warm water at about 54°C (130°F). The temperature was maintained for 10 minutes. The mixture was stirred at high speed for 30 seconds. After the first 10 seconds of stirring, the paper was loosened and stirred for an additional 20 seconds. The suspension was drained on a sleeve and washed; the pulp was stirred into 500 ml of fresh cold water using a stirring rod and drained again on the sieve and this procedure repeated twice more. The washed pulp was stirred into 1 litre of fresh cold water using a stirring rod. A handsheet was made on a sheet machine from 400 ml of the pulp solution, by draining 400 ml of the pulp suspension on a sieve, adding 100 ml of water at 74°C (165°F) and placing the mixture in a hot water bath maintained at approximately 74°C (165°F). Then 0.08 g of zinc hydrosulphite was added and the mixture was stirred for 10 seconds and left to stand without agitation for about 15 minutes while maintaining the temperature. A handsheet was then made of the decolorized pulp. The brightness of the handsheet was then obtained on a Tappi standard brightness meter using Tappi standard T-452. The results are summarized in the Table.

TABLE

| Additive | Average brightness | |
| --- | --- | --- |
| | Unbleached | Bleached |
| none | 44.8 | 51.3 |
| DMDAAC/AM[1] | 46.9 | 54.3 |

[1]DMDAAC/AM=dimethyldiallyl ammonium chloride/acrylamide copolymer

## Claims

1. A method for deinking cellulosic fibrous material impregnated with ink comprising stirring a mixture of the said material and water in the presence of a deinking agent, characterized in that the deinking agent is an incompletely hydrolysed copolymer of dimethyldiallyl ammonium chloride and acrylamide, optionally also containing up to 5% by weight of diethyldiallyl ammonium chloride based on the total weight of dimethyldiallyl ammonium chloride and diethyldiallyl ammonium chloride.

2. A method as claimed in Claim 1 in which 4 to 5% by weight of the acrylamide is hydrolysed to acrylic acid.

3. A method as claimed in Claim 1 or 2 in which the weight ratio of acrylamide to dimethyldiallyl ammonium chloride or to dimethyldiallyl plus diethyldiallyl ammonium chloride is the range 75:25 to 25:75.

4. A method as claimed in Claim 3, in which the said weight ratio is in the range 55:45 to 45:55.

5. A method as claimed in any preceding claim in which the molecular weight of the copolymer is 2,000,000 to 10,000,000 as determined by gel permeation chromatography.

6. A method as claimed in any preceding claim in which from 0.01 to 0.1% by weight of the copolymer is used, based on the dry paper weight.

## Patentansprüche

1. Verfahren zum De-inken von fasrigem, mit Farbe imprägniertem Cellulosematerial durch Rühren einer Mischung dieses Materials mit Wasser in Gegenwart eines De-inkingmittels, dadurch gekennzeichnet, dass das De-inkingmittel ein unvollständig hydrolysiertes Copolymer von Dimethyldiallylammoniumchlorid und Acrylamid ist, das gegebenenfalls auch bis zu 5 Gew.-% Diethyldiallylammoniumchlorid enthält, bezogen auf das Gesamtgewicht an Dimethyldiallylammoniumchlorid und Diethyldiallylammoniumchlorid.

2. Verfahren, wie in Anspruch 1 beansprucht, worin 4 bis 5 Gew.-% des Acrylamids zu Acrylsäure hydrolysiert ist.

3. Verfahren, wie in Anspruch 1 oder 2 beansprucht, worin das Gewichtsverhältnis von Acrylamid zu Dimethyldiallylammoniumchlorid oder zu Dimethyldiallyl- plus Diethyldiallylammoniumchlorid im Bereich von 75:25 bis 25:75 liegt.

4. Verfahren, wie in Anspruch 3 beansprucht, worin das Gewichtsverhältnis im Bereich von 55:45 bis 45:55 liegt.

5. Verfahren, wie in einem der vorstehenden Ansprüche beansprucht, worin das Molekulargewicht des Copolymeren 2 000 000 bis 10 000 000 beträgt, bestimmt durch Gelpermeationschromatographie.

6. Verfahren, wie in einem der vorstehenden Ansprüche beansprucht, worin 0,01 bis 0,1 Gew.-% an Copolymer verwandt werden, bezogen auf das Trockengewicht des Papiers.

## Revendications

1. Procédé pour désencrer une matière fibreuse cellulosique imprégnée d'encre dans lequel on agite un mélange de ladite matière et d'eau en présence d'un agent de désencrage, caractérisé en ce que l'agent de désencrage est un copolymère incomplètement hydrolysé de diméthyldiallyl chlorure d'ammonium et d'acrylamide, contenant éventuellement également jusqu'à 5% en poids de diéthyldiallyl chlorure d'ammonium sur la base du poids total de diméthyldiallyl chlorure d'ammonium et de diéthyldiallyl chlorure d'ammonium.

2. Procédé selon la revendication 1 dans lequel on hydrolyse de 4 à 5% en poids de l'acrylamide en acide acrylique.

3. Procédé selon la revendication 1 ou 2 dans lequel le rapport pondéral de l'acrylamide ou diméthyldiallyl chlorure d'ammonium ou au diméthyldiallyl plus diéthyldiallyl chlorure d'ammonium est dans un intervalle de 75:25 à 25:75.

4. Procédé selon la revendication 3, dans lequel ledit rapport pondéral est dans un intervalle de 55:45 à 45:55.

5. Procédé selon l'une quelconque des revendications précédentes dans lequel le poids moléculaire du copolymère est de 2 000 000 à 10 000 000 tel que déterminé par chromatographie de perméation sur gel.

6. Procédé selon l'une quelconque des revendications précédentes dans lequel on utilise de 0,01 à 0,1% en poids du copolymère, sur la base du poids de papier sec.